# FASCICULE DE BREVET EUROPEEN

(11) **EP 2 131 300 B1**
(45) Date de publication et mention de la délivrance du brevet: **01.08.2018**
(21) Numéro de dépôt: 09161673.0
(22) Date de dépôt: 02.06.2009
(51) Int. Cl.: G06F 21/78

(54) **Procédé et dispositif de sécurisation pour entité électronique portable**
Verfahren und Vorrichtung zur Sicherung von tragbaren elektronischen Einheiten
Securing method and device for a portable electronic entity

(30) Priorité: 06.06.2008 FR 0853793
(43) Date de publication de la demande: 09.12.2009
(73) Titulaire: IDEMIA France, 92700 Colombes (FR)
(72) Inventeur: Moyart, Didier, 69006, Lyon (FR); Leduc, Olivier, 69800 Saint-Priest (FR)
(74) Mandataire: Santarelli

(56) Documents cités:
- US-A1- 2001 011 267
- US-A1- 2007 113 097

## Description

La présente invention concerne les périphériques pour unités de traitement tels que les clés USB, les cartes de type MMC ou SD et les lecteurs de telles cartes et plus particulièrement un procédé et un dispositif permettant de sécuriser les données contenues dans de tels périphériques ou accessibles via de tels périphériques.

Il existe de nombreux périphériques, couramment utilisés, tels que les clés USB (sigle de *Universal Serial Bus* en terminologie anglo-saxonne), les cartes de type MMC (sigle de *Multimedia Memory Card* en terminologie anglo-saxonne) et SD (sigle de *Secure Digital* en terminologie anglo-saxonne), les cartes à microcircuit, notamment les cartes à microcircuit conformes à la norme ISO 7816, et les lecteurs de telles cartes, permettant d'ajouter des fonctionnalités à une unité de traitement, par exemple des fonctionnalités de stockage.

Les unités de traitement, aussi appelées stations hôtes, adaptées à coopérer avec de tels périphériques, sont notamment les ordinateurs, les téléphones mobiles et les assistants personnels aussi appelés PDA (sigle de *Personal Digital Assistant* en terminologie anglo-saxonne). Les connexions entre ces unités de traitement et les périphériques sont réalisées de façon classique, notamment à l'aide d'une interface physique et d'une liaison électrique, ou selon une technologie sans fil, par exemple selon le standard appelées *wireless USB* en terminologie anglo-saxonne.

Certains périphériques mettent en oeuvre des dispositifs pour sécuriser l'accès aux fonctions des périphériques ou aux données mémorisées dans ces derniers. Il existe ainsi des systèmes USB comprenant plusieurs sous-interfaces, notamment de type stockage et de type interface utilisateur. De tels systèmes sont adaptés à mettre en oeuvre des fonctions de sécurité de telle sorte que les zones de stockage ne sont effectivement accessibles qu'après authentification de l'utilisateur.

Il existe également des périphériques comprenant des modules de chiffrement et de déchiffrement de données permettant de chiffrer toutes les données devant être mémorisées et de déchiffrer toutes les données devant être lues, après authentification. Certains périphériques comprennent ainsi des microcontrôleurs permettant de gérer les accès mémoires et intégrant des fonctions de chiffrement et de déchiffrement.

Cependant, de tels composants sont spécifiques et, par conséquent, ont des coûts importants.

Le document US2007/113097A1 décrit un support de stockage comprenant un moyen d'adaptation de caractéristiques biologiques d'utilisateur et une carte à puce; dans lequel la fonction biologique d'un utilisateur est utilisée comme mot de passe pour accéder au support de stockage et la carte à puce est utilisée pour chiffrer / déchiffrer les données stockées dans le support de stockage afin de protéger efficacement les données stockées dans le support de stockage.

Le document US2001/011267A1 décrit l'utilisation d'une carte mémoire pour gérer des fichiers enregistrés dans une mémoire non volatile avec une table d'allocation de fichiers (FAT). L'invention permet de résoudre au moins un des problèmes exposés précédemment combinant la sécurisation des données et l'utilisation de composants non spécifiques.

L'invention a ainsi pour objet un procédé pour accéder à au moins une donnée chiffrée préalablement mémorisée dans une mémoire de masse d'une entité électronique portable ou dans une mémoire de masse accessible via ladite entité électronique portable, ladite entité électronique portable, adaptée à être connectée à une station hôte, ladite entité électronique portable comprenant des moyens d'accès à ladite mémoire de masse comprenant ladite au moins une donnée chiffrée et des moyens de sécurisation adaptés à déchiffrer ladite au moins une donnée chiffrée, lesdits moyens d'accès et lesdits moyens de sécurisation étant distincts et indépendants et n'échangeant pas de données entre eux, ce procédé comprenant les étapes suivantes,
- réception de ladite au moins une donnée chiffrée desdits moyens d'accès ;
- transmission de ladite au moins une donnée chiffrée reçue auxdits moyens de sécurisation pour y être déchiffrée ; et,
- réception de ladite au moins une donnée déchiffrée,
lesdites étapes étant mises en oeuvre dans ladite station hôte.

Le procédé selon l'invention permet ainsi de mettre en oeuvre indépendamment un circuit de sécurisation et un contrôleur associé à une mémoire de masse pour sécuriser les données stockées dans cette mémoire.

De façon avantageuse, le procédé comprend en outre une étape de création d'une partition, ladite partition comprenant au moins ladite au moins une donnée déchiffrée reçue.

Selon un mode de réalisation particulier, le procédé comprend en outre les étapes suivantes,
- transmission d'au moins une information d'authentification auxdits moyens de sécurisation ; et,
- réception d'une indication d'authentification,
lesdites étapes étant mises en oeuvre dans ladite station hôte.

Le procédé selon l'invention permet ainsi d'authentifier l'utilisateur.

Ladite au moins une donnée déchiffrée n'est, de préférence, reçue qu'après authentification pour limiter son accessibilité.

De façon avantageuse, ladite étape de création de partition n'est réalisée qu'après authentification de telle sorte que la partition n'est pas visible si l'utilisateur n'est pas authentifié.

L'invention a également pour objet un procédé pour mémoriser au moins une donnée de façon chiffrée dans une mémoire de masse d'une entité électronique portable ou dans une mémoire de masse accessible via ladite entité électronique portable, ladite entité électronique portable, adaptée à être connectée à une station hôte, ladite entité électronique portable comprenant des moyens d'accès à ladite mémoire de masse et des moyens de sécurisation adaptés à chiffrer ladite au moins une donnée, lesdits moyens d'accès et lesdits moyens de sécurisation étant distincts et indépendants et n'échangeant pas de données entre eux, ce procédé comprenant les étapes suivantes,
- transmission de ladite au moins une donnée auxdits moyens de sécurisation pour y être chiffrée ;
- réception de ladite au moins une donnée chiffrée desdits moyens de sécurisation ; et,
- transmission de ladite au moins une donnée chiffrée auxdits moyens d'accès pour mémoriser ladite au moins une donnée chiffrée dans ladite mémoire de masse,
lesdites étapes étant mises en oeuvre dans ladite station hôte.

Le procédé selon l'invention permet ainsi de mettre en oeuvre indépendamment un circuit de sécurisation et un contrôleur associé à une mémoire de masse pour sécuriser les données stockées dans cette mémoire.

Selon un mode de réalisation particulier, le procédé comprend en outre une étape de mémorisation de toutes les données de ladite partition créée. Ladite étape de mémorisation de toutes les données est, de préférence, effectuée automatiquement au cours d'une procédure de déconnexion de ladite entité électronique portable. Ladite étape de mémorisation de toutes les données peut également être effectuée sur requête de l'utilisateur de ladite entité électronique portable ou de ladite station hôte.

L'invention a aussi pour objet un procédé pour accéder au moins une donnée chiffrée préalablement mémorisée dans une mémoire de masse d'une entité électronique portable ou dans une mémoire de masse accessible via ladite entité électronique portable, ladite entité électronique portable, adaptée à être connectée à une station hôte, ladite entité électronique portable comprenant des moyens d'accès à ladite mémoire de masse comprenant ladite au moins une donnée chiffrée et des moyens de sécurisation adaptés à déchiffrer ladite au moins une donnée, lesdits moyens d'accès et lesdits moyens de sécurisation étant distincts et indépendants et n'échangeant pas de données entre eux, ce procédé comprenant les étapes suivantes,
- réception d'une requête d'accès à ladite au moins une donnée chiffrée par lesdits moyens d'accès ;
- transmission de ladite au moins une donnée chiffrée à ladite station hôte ;
- réception de ladite au moins une donnée chiffrée par lesdits moyens de sécurisation ;
- déchiffrement de ladite au moins une donnée chiffrée ; et,
- transmission de ladite au moins une donnée déchiffrée à ladite station hôte.

Le procédé selon l'invention permet ainsi de mettre en oeuvre indépendamment un circuit de sécurisation et un contrôleur associé à une mémoire de masse pour sécuriser les données stockées dans cette mémoire.

L'invention a également pour objet un procédé pour mémoriser au moins une donnée de façon chiffrée dans une mémoire de masse d'une entité électronique portable ou dans une mémoire de masse accessible via ladite entité électronique portable, ladite entité électronique portable, adaptée à être connectée à une station hôte, ladite entité électronique portable comprenant des moyens d'accès à ladite mémoire de masse et des moyens de sécurisation adaptés à chiffrer ladite au moins une donnée, lesdits moyens d'accès et lesdits moyens de sécurisation étant distincts et indépendants et n'échangeant pas de données entre eux, ce procédé étant caractérisé en ce qu'il comprend les étapes suivantes,
- réception de ladite au moins une donnée par lesdits moyens de sécurisation ;
- chiffrement de ladite au moins une donnée dans lesdits moyens de sécurisation ;
- transmission de ladite au moins une donnée chiffrée à ladite station hôte ;
- réception de ladite au moins une donnée chiffrée de ladite station hôte par lesdits moyens d'accès ; et,
- transmission de ladite au moins une donnée chiffrée à ladite mémoire de masse pour y être mémorisée.

Le procédé selon l'invention permet ainsi de mettre en oeuvre indépendamment un circuit de sécurisation et un contrôleur associé à une mémoire de masse pour sécuriser les données stockées dans cette mémoire.

De façon avantageuse, le procédé comprend en outre une étape de réception d'au moins une information d'authentification et une étape d'authentification de l'utilisateur de ladite entité électronique portable pour limiter l'accès à ladite au moins une donnée.

Selon un mode de réalisation particulier, ladite étape d'authentification est mise en oeuvre dans lesdits moyens de sécurisation.

De façon avantageuse, lesdites étapes de déchiffrement et de transmission de ladite au moins une donnée déchiffrée ne sont exécutées qu'après authentification dudit utilisateur de ladite entité électronique portable afin de contrôler l'accès à ladite au moins une donnée.

Lesdites étapes de chiffrement et de transmission de ladite au moins une donnée chiffrée ne sont avantageusement exécutées qu'après authentification dudit utilisateur de ladite entité électronique portable pour contrôler les données devant être mémorisées dans ladite entité électronique portable.

L'invention a également pour objet un programme d'ordinateur comprenant des instructions adaptées à la mise en oeuvre de chacune des étapes du procédé décrit précédemment.

L'invention a aussi pour objet un dispositif pour entité électronique portable tel que revendiqué dans la revendication 17 annexée. Le dispositif selon l'invention permet ainsi de mettre en oeuvre indépendamment un circuit de sécurisation et un contrôleur associé à une mémoire de masse pour sécuriser les données stockées dans cette mémoire.

De façon avantageuse, le dispositif comprend en outre des moyens pour recevoir au moins une information d'authentification, lesdits moyens de sécurisation comprenant des moyens d'authentification adaptés à authentifier un utilisateur selon au moins une information d'authentification reçue. De même, lesdits moyens de sécurisation comprennent des moyens de chiffrement et de déchiffrement adaptés à chiffrer des données à mémoriser dans ladite entité électronique et à déchiffrer des données mémorisées dans ladite entité électronique.

Le dispositif comprend en outre, avantageusement, des moyens de stockage adaptés à mémoriser au moins une clé de chiffrement et/ou de déchiffrement utilisée pour chiffrer ou déchiffrer des données à mémoriser ou mémorisées dans ladite entité électronique.

Selon un mode de réalisation particulier, le dispositif comprend en outre des moyens de stockage adaptés à mémoriser un module logiciel de contrôle, ledit module logiciel de contrôle, comprenant des instructions adaptées à mettre en oeuvre chacune des étapes du procédé décrit précédemment, pouvant être transmis à ladite station hôte pour y être exécuté. Le dispositif selon l'invention peut ainsi être utilisé avec une station hôte sans qu'il soit nécessaire d'installer préalablement un module logiciel spécifique.

De façon avantageuse, le dispositif comprend en outre des moyens de stockage adaptés à mémoriser un module logiciel de sécurisation, ledit module logiciel de sécurisation, comprenant des instructions adaptées à mettre en oeuvre chacune des étapes du procédé décrit précédemment, pouvant être exécuté par lesdits moyens de sécurisation. Le dispositif selon l'invention peut ainsi être utilisé avec une station hôte sans nécessité d'installation logicielle particulière.

Selon un mode de réalisation particulier, ledit dispositif comprend en outre une mémoire de masse comprenant ladite zone mémoire.

Toujours selon un mode de réalisation particulier, lesdits moyens de sécurisation sont intégrés dans une carte à microcircuit. Il ainsi possible d'ajouter et de personnaliser des fonctionnalités de sécurisation des données dans une entité électronique portable.

L'invention a également pour objet une clé de type USB comprenant le dispositif décrit précédemment.

D'autres avantages, buts et caractéristiques de la présente invention ressortent de la description détaillée qui suit, faite à titre d'exemple non limitatif, au regard des dessins annexés dans lesquels :
- la figure 1 représente un exemple d'architecture d'une entité électronique portable selon l'invention ;
- la figure 2 illustre un ordinateur auquel peut être connectée l'entité électronique portable représentée sur la figure précédente ;
- la figure 3 illustre un exemple d'algorithme mis en oeuvre dans la station hôte, après connexion d'une entité électronique portable conforme à l'invention, permettant d'accéder à des données chiffrées dans ou via une telle entité électronique portable ;
- la figure 4 illustre un exemple d'algorithme pouvant être exécuté par une entité électronique portable conforme à l'invention, après connexion de celle-ci à une station hôte, pour permettre à cette dernière d'accéder à des données chiffrées dans ou via cette entité électronique portable ;
- la figure 5 illustre un exemple d'algorithme mis en oeuvre dans une station hôte pour chiffrer des données dans une entité électronique portable et mémoriser ces données dans celle-ci ou via celle-ci ;
- la figure 6 illustre un exemple d'algorithme pouvant être exécuté par une entité électronique portable selon l'invention pour permettre à une station hôte de transférer des données dans ou via cette entité électronique portable, ces données étant mémorisées sous forme chiffrée ; et,
- la figure 7 illustre un exemple d'architecture de station hôte adaptée à mettre en oeuvre l'invention.

De façon générale, l'invention concerne une entité électronique portable ou de poche pouvant être connectée à l'aide d'une interface physique ou sans fil à une station hôte telle qu'un ordinateur de type PC (sigle de *Personal Computer* en terminologie anglo-saxonne), un téléphone mobile ou un assistant personnel, comprenant une mémoire de masse ou apte à être connectée à une mémoire de masse. L'entité électronique portable selon l'invention comprend des moyens pour chiffrer et déchiffrer au moins une partie des données mémorisées.

L'entité électronique portable ou de poche peut être, par exemple, une carte de type MMC ou SD, une carte à microcircuit, notamment une carte à microcircuit conforme à la norme ISO 7816, un lecteur USB d'une telle carte ou une clef USB.

L'entité électronique portable dispose ici d'une mémoire de masse, formée, par exemple, d'une mémoire flash ou d'une mémoire de type EEPROM (acronyme de *Electrically-Erasable Programmable Read-Only Memory* en terminologie anglo-saxonne), c'est-à-dire une mémoire morte effaçable électriquement et programmable, d'un disque dur, d'un lecteur, éventuellement graveur, de CD ou tout autre composant connu de l'homme de métier ou d'une interface vers une telle mémoire. La quantité de mémoire est, de préférence, supérieure à 10 méga-octets.

L'entité électronique portable comporte un contrôleur de mémoire permettant d'accéder à la mémoire de masse contenu dans l'entité électronique portable ou dans une mémoire de masse pouvant être connectée à l'entité électronique portable.

L'entité électronique portable comporte également un composant sécurisé, c'est-à-dire un composant comportant des moyens de calcul cryptographique, des moyens de mémorisation adaptés à stocker une clé sécrète et des moyens de chiffrement et de déchiffrement. Avantageusement, le composant sécurisé comprend également des moyens offrant une protection contre des attaques visant à obtenir les informations secrètes, par exemple la clé, mémorisées dans l'entité électronique portable.

Le composant sécurisé est distinct du contrôleur mémoire. Il peut être intégré, par exemple, à une carte à microcircuit, notamment une carte dont le format est conforme à la norme ISO 7816. Une telle carte peut être amovible ou non, l'entité électronique portable comprenant ici un lecteur de carte adapté.

L'entité électronique portable comprend en outre une interface de communication permettant de la connecter à une station hôte. Cette interface de communication est reliée au contrôleur mémoire et au composant sécurisé. Alternativement, l'entité électronique portable peut comprendre deux interfaces de communication pour établir deux connexions indépendantes entre le contrôleur mémoire et la station hôte et entre le composant sécurisé et la station hôte.

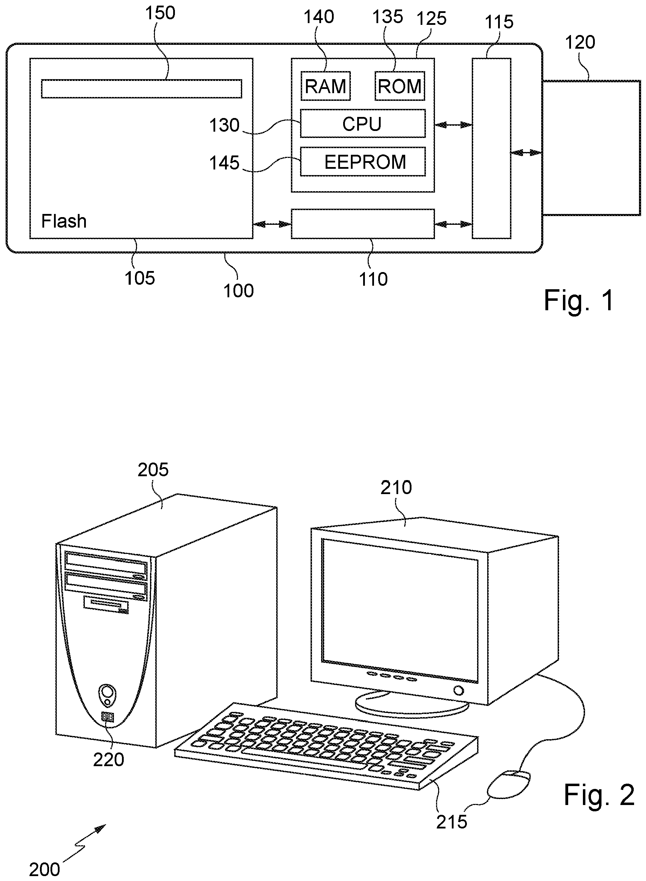

La figure 1 illustre un exemple d'une entité électronique portable selon l'invention, ici une clé USB comprenant une mémoire de masse à accès sécurisé.

Comme illustré, la clé USB 100 comprend une mémoire 105, par exemple une mémoire flash, un contrôleur de mémoire 110, une interface de communication 115, reliée ici à une interface physique 120, et un microcontrôleur sécurisé 125.

L'interface de communication 115 permet, en particulier, à la clé USB 100 d'être identifiée comme un périphérique de classe mémoire, ou MSC (sigle de *Mass Storage Class* en terminologie anglo-saxonne), de type mémoire de masse, lecteur de CD-ROM (acronyme de *Compact Disc Read Only Memory* en terminologie anglo-saxonne) ou similaire, conformément au standard USB.

L'interface de communication 115 est adaptée à mettre en oeuvre une fonctionnalité de concentrateur, aussi appelé *hub* en terminologie anglo-saxonne, permettant d'adresser les messages reçus au contrôleur mémoire 110 ou au microcontrôleur sécurisé 125. L'adressage peut notamment être effectué au moyen d'un indicateur, par exemple la valeur d'un bit, contenu dans les messages reçus.

Le microcontrôleur sécurisé 125 comprend lui-même une unité de calcul 130 (CPU, sigle de *Central Processing Unit* en terminologie anglo-saxonne), une mémoire morte 135 (ROM, acronyme de *Read Only Memory* en terminologie anglo-saxonne), une mémoire vive ou mémoire cache 140 (RAM, acronyme de *Random Access Memory* en terminologie anglo-saxonne) et mémoire de type EEPROM.

Les mémoires morte 135 et vive 140 sont utilisées de façon classique par l'unité de calcul 130.

La mémoire 145 de type EEPROM est notamment adaptée à mémoriser une clé secrète et/ou un mot de passe tel qu'un code PIN (acronyme de *Personal Identification Number* en terminologie anglo-saxonne).

Les fonctions de chiffrement et de déchiffrement peuvent être mémorisées dans la mémoire morte 135 ou, avantageusement, dans la mémoire 145 de type EEPROM. Il est à noter que cette dernière étant réinscriptible, elle permet des mises à jour logicielles.

La mémoire 105 peut être considérée comme une ou plusieurs partitions, c'est-à-dire, selon la définition communément admise, comme une mémoire comprenant un système de gestion de fichiers.

A titre d'illustration, la mémoire 105 comprend ici une partition 150 dont les données sont chiffrées. La partition 150 est ici stockée sous forme d'un fichier chiffré.

La mémoire 105 est adaptée à mémoriser un module logiciel, appelé logiciel de contrôle dans la suite de la description, pouvant être transféré dans la station hôte pour y être exécuté. Alternativement, ce module logiciel peut être mémorisé dans la mémoire 145.

Selon un mode de réalisation particulier, lorsque l'entité électronique portable est connectée (et en cours d'utilisation) elle est considérée comme une mémoire de masse dont au moins une partition est chiffrée, c'est-à-dire qu'au moins une partition représente des données « non intelligibles ».

L'interface 120 de la clé USB 100 est ici une interface conforme au standard USB permettant de connecter la clé à une unité de traitement telle qu'un ordinateur. Alternativement, si l'interface de communication 115 est de type dans fil, l'interface 120 est remplacée par une antenne. L'interface 115/120 peut également consister en une double interface permettant une connexion classique ou une connexion sans fil selon sa configuration.

Comme indiqué précédemment, selon un mode de réalisation particulier, l'interface de communication 115, utilisée comme un concentrateur entre la station hôte, le contrôleur mémoire et le microcontrôleur sécurisé, est remplacée par deux interfaces de communication distinctes, le microcontrôleur sécurisé et le contrôleur mémoire étant chacun relié à l'une de ces interfaces par ailleurs chacune connectable à la station hôte.

A titre d'illustration, l'entité électronique portable selon ce mode de réalisation peut être une carte à microcircuit conforme à la norme ISO 7816, comportant une vignette avec huit contacts dont deux peuvent être reliés au microcontrôleur sécurisé. Par ailleurs, de façon standard, deux autres contacts sont dédiés aux échanges de données conformément à la norme USB. Les deux contacts USB sont exclusivement reliés au contrôleur de mémoire et permettent à celui-ci de communiquer avec une station hôte. Les contacts d'alimentation et d'horloge sont partagés avec ceux de la norme ISO 7816.

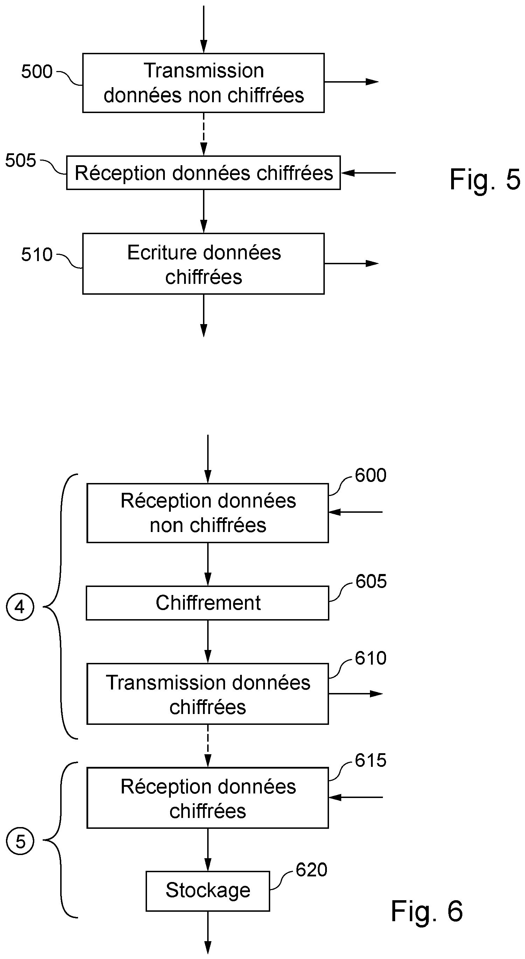

La figure 2 illustre un ordinateur 200 auquel peut être connectée la clé USB 100 illustré sur la figure 1. L'ordinateur 200 comprend ici une unité centrale 205 dont un exemple d'architecture est illustré sur la figure 6, un écran 210, un clavier et un dispositif de pointage 215. L'unité centrale 205 comprend une interface de communication 220, ici un connecteur USB, adaptée à recevoir la clé USB 100.

L'unité centrale 205 comprend un module logiciel de communication de données pour recevoir et transmettre des données via l'interface de communication 200. Un tel module logiciel de communication est aussi appelé *driver* en terminologie anglo-saxonne.

L'unité centrale 205 est en outre adaptée à exécuter un logiciel de contrôle permettant notamment de recevoir, via une autre application ou via des moyens de saisie, et de transmettre, via l'interface de communication 220, des données d'authentification telles qu'une signature ou un mot de passe.

Le logiciel de contrôle est également adapté à transférer des données à chiffrer vers la clé USB 100 et à recevoir ces données déchiffrées de celle-ci et réciproquement.

Selon un mode de réalisation particulier, le logiciel de contrôle exécuté par l'unité centrale 205 est reçu de la clé USB 100 lorsque celle-ci est connectée. Le logiciel de contrôle peut être automatiquement effacé de la station hôte à la déconnexion de la clé USB 100 ou non.

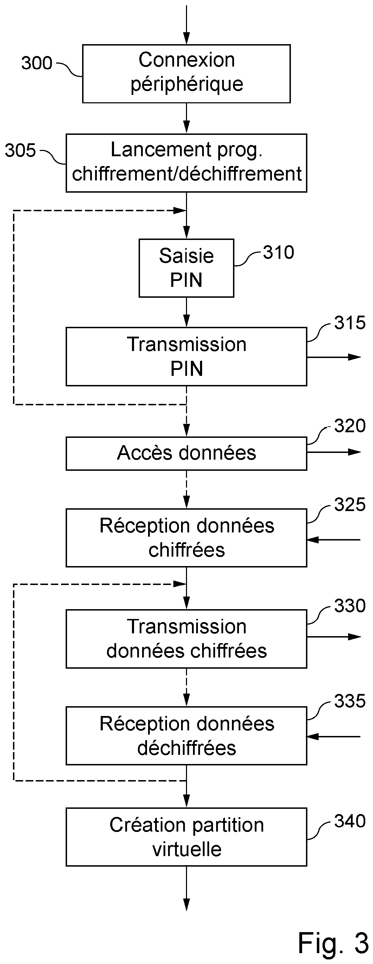

La figure 3 illustre un exemple d'algorithme mis en oeuvre dans la station hôte, après connexion d'une entité électronique portable conforme à l'invention, permettant d'accéder à des données chiffrées dans ou via une telle entité électronique portable.

Ainsi, comme illustré, après la connexion de l'entité électronique portable (étape 300), le logiciel de contrôle est exécuté (étape 305).

Le logiciel de contrôle, comprenant ici les étapes 310 à 340, est de préférence mémorisé dans la mémoire 105 de l'entité électronique portable. Après transmission de celui-ci de l'entité électronique portable à la station hôte, il est exécuté selon une commande d'exécution automatique, appelée *autorun* en terminologie anglo-saxonne. L'exécution automatique peut être implémentée, par exemple, en créant une sous-interface de type lecteur de CD-ROM, conformément à la norme USB.

Alternativement, cette application peut être présente dans la station hôte. Elle peut être automatiquement exécutée lors de la connexion de la clé USB 100 ou être exécutée par l'utilisateur.

Après le lancement du logiciel de contrôle, l'utilisateur est invité à s'authentifier (étape 310) en saisissant, par exemple, un code PIN à l'aide des moyens d'entrées/sorties de la station hôte tels qu'un clavier. Alternativement, d'autres types de données peuvent être utilisés pour authentifier l'utilisateur. A titre d'illustration, ces données peuvent être des données biométriques telles qu'une empreinte digitale ou une photo d'identité (ces données peuvent être acquises via un capteur correspondant) ou des données cryptographiques telles qu'une signature pouvant être mémorisée dans une carte à microcircuit accessible à la station hôte.

Ces données d'authentification sont alors transmises à l'entité électronique portable (étape 315) à travers l'interface de communication reliant la station hôte à cette entité. De façon avantageuse, les données d'authentification sont transmises à l'entité électronique portable selon le protocole USB ou un protocole similaire, sous forme de paquets de données, appelés APDU (sigle de *Application Protocol Data Unit* en terminologie anglo-saxonne).

Ainsi, de façon générale, l'application de contrôle d'accès lancée sur la station hôte permet de saisir ou de recevoir des données d'authentification de l'utilisateur, ces données étant ensuite transmises à l'entité électronique portable.

L'application de contrôle d'accès est de préférence une application comprenant une interface graphique du type de celles mises en oeuvre par le système d'exploitation de la station hôte.

En réponse aux données d'authentification, l'entité électronique portable transmet un message indiquant si l'utilisateur est authentifié ou non. Comme suggéré par la flèche en trait pointillé, si l'utilisateur n'est pas authentifié, il est à nouveau invité à entrer des données d'authentification. De façon avantageuse, l'entité électronique portable se bloque automatiquement après plusieurs tentatives infructueuses d'authentification, par exemple après trois tentatives. Le logiciel de contrôle est alors, de préférence, arrêté.

Alternativement, les données d'authentification sont acquises directement sur l'entité électronique portable à l'aide, par exemple, d'un capteur biométrique tel qu'un capteur d'empreintes digitales ou d'un clavier permettant de saisir un code d'accès.

Si l'utilisateur est authentifié, le logiciel de contrôle transmet à l'entité électronique portable une requête (étape 320) pour accéder aux données chiffrées mémorisées dans celle-ci ou accessibles via celle-ci. Alternativement, la requête peut ne viser que certaines données chiffrées, notamment une partition ou un fichier spécifique.

Selon un mode de réalisation particulier, les données chiffrées sont mémorisées sous forme d'un fichier chiffré, ces données étant, après déchiffrement, présentées sous forme d'une partition.

La requête pour accéder aux données a ici pour objet la lecture de l'en-tête du fichier chiffré représentant les données. Après avoir été reçu, cet en-tête est transmis au microcontrôleur sécurisé de l'entité électronique portable où une clé de déchiffrement Kd est calculée à partir de l'en-tête, d'une clé maître mémorisé dans le microcontrôleur sécurisé et, avantageusement, d'au moins une partie des données d'authentification préalablement reçues.

Si la clé de déchiffrement est valide, un message d'acquiescement est transmis au logiciel de contrôle qui récupère alors l'ensemble des données du fichier chiffré (étape 235). Ces données sont mémorisées, par exemple, dans un fichier appelé Fchiffré dans la mémoire de la station hôte.

Les données contenues dans ce fichier sont alors transmises à l'entité électronique portable (étape 330), à destination du microcontrôleur sécurisé, où elles sont déchiffrées à l'aide de la clé Kd déterminée préalablement et retransmises à destination de la station hôte.

Les données déchiffrées reçues par la station hôte (étape 335) sont mémorisées dans celle-ci, par exemple sous forme d'un fichier appelé Fclair.

Comme illustré par la flèche en trait pointillé, les étapes 330 et 335 sont répétées tant que toutes les données du fichier chiffré (Fchiffré) mémorisé dans la station hôte n'ont pas été déchiffrées par le microcontrôleur de l'entité électronique portable.

Ainsi, le fichier Fclair est l'image, déchiffrée, du fichier Fchiffré qui est lui-même la copie d'un fichier similaire mémorisé dans la mémoire de masse de l'entité électronique portable ou dans une mémoire de masse qui lui est connectée.

Une partition virtuelle est alors créée, sur la station hôte, par le logiciel de contrôle à partir des données du fichier déchiffré Fclair (étape 340). Cette partition virtuelle est vue, de préférence, comme un disque dur de la station hôte.

L'utilisateur peut alors accéder aux données de cette partition virtuelle, les modifier, les supprimer ou en ajouter de nouvelles, comme il le ferait avec d'autres partitions.

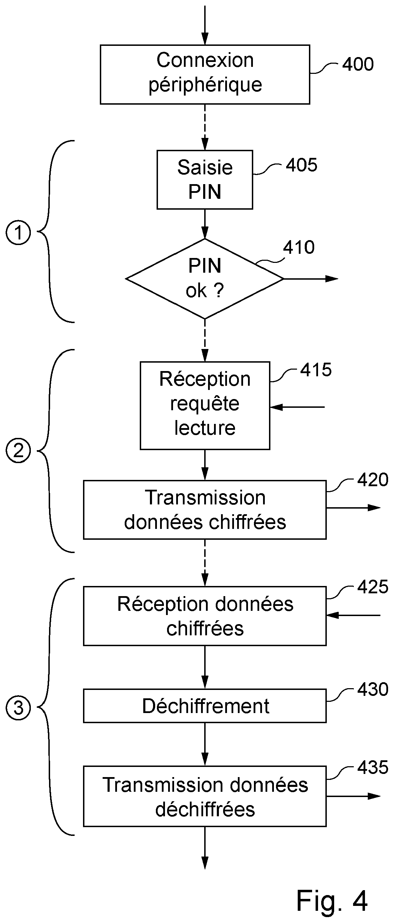

La figure 4 illustre un exemple d'algorithme pouvant être exécuté par une entité électronique portable conforme à l'invention, après connexion de celle-ci à une station hôte, pour permettre à cette dernière d'accéder à des données chiffrées dans ou via cette entité électronique portable

Après connexion de l'entité électronique portable à une station hôte (étape 400) et après avoir reçu les données d'authentification (étape 405), par exemple un code PIN, un test est effectué pour authentifier l'utilisateur à travers ces données (étape 410). Comme indiqué précédemment, les données d'authentification peuvent être reçues soit de la station hôte soit d'un capteur ou de moyens de saisie directement intégrés dans l'entité électronique portable.

La nature du test d'authentification dépend de la nature des données d'authentification reçues. Si les données reçues sont un mot de passe, un code PIN ou des données biométriques, par exemple des données représentatives d'une empreinte digitale ou d'une photo d'identité, ce test peut consister à comparer les données reçues avec des données préalablement mémorisées, de préférence, dans une mémoire de type EEPROM de l'entité électronique portable. L'utilisateur est alors authentifié si les données sont similaires. Si les données reçues sont des données cryptographiques, un calcul est effectué pour comparer la signature portée par ces données avec une clé secrète préalablement enregistrée et mémorisée, de préférence, dans une mémoire de type EEPROM de l'entité électronique portable.

Si l'utilisateur est authentifié, un message d'acquiescement est transmis à la station hôte. Dans le cas contraire, un message est transmis pour indiquer que l'utilisateur n'est pas authentifié. Comme indiqué précédemment, le nombre de tentatives d'authentification est de préférence limité. Par exemple, après trois tentatives infructueuses d'authentification, l'entité électronique portable se bloque de telle façon qu'il soit nécessaire d'attendre un temps prédéterminé avant de pouvoir s'authentifier à nouveau et/ou qu'il soit nécessaire de déconnecter et reconnecter l'entité électronique portable.

Dans cette phase, notée ①, les messages sont échangés entre la station hôte et le microcontrôleur sécurisé. Il n'est pas fait appel, ici, au contrôleur mémoire.

Lorsque l'entité électronique portable reçoit une requête de lecture de données (étape 415), les données sont accédées et transmises à la station hôte (étape 420). Il convient de remarquer ici que les données sont transmises sans être traitées. Par conséquent, si les données sont chiffrées, elles sont transmises chiffrées.

Dans cette phase, notée ②, les messages sont échangés entre la station hôte et le contrôleur mémoire. Il n'est pas fait appel, ici, au microcontrôleur sécurisé.

Lorsque l'entité électronique portable reçoit des données chiffrées à déchiffrer (étape 425), les données sont déchiffrées (étape 430), par exemple à l'aide de la clé Kd préalablement déterminée, et retransmises à la station hôte (étape 435).

Dans cette phase, notée ③, les messages sont échangés entre la station hôte et le microcontrôleur sécurisé. Il n'est fait pas appel, ici, au contrôleur mémoire.

Comme indiqué précédemment, l'accès aux données d'un fichier chiffré est réalisé en plusieurs étapes. Une première étape consiste à accéder à l'en-tête du fichier dans l'entité électronique portable via le contrôleur mémoire et à le retransmettre au microcontrôleur sécurisé de l'entité électronique portable pour déterminer la clé de déchiffrement.

Les données chiffrées sont ensuite lues dans l'entité électronique portable via le contrôleur mémoire et retransmises au microcontrôleur sécurisé de l'entité électronique portable pour être déchiffrées.

Ainsi, il n'y a pas d'échange de données entre le contrôleur mémoire et le microcontrôleur sécurisé et, par conséquent, il n'est pas nécessaire d'utiliser des composants ou une architecture spécifique.

De façon similaire, lorsque l'entité électronique mobile doit être déconnectée, sur requête de l'utilisateur ou sur requête de la station hôte ou de l'entité électronique, les données non chiffrées accessibles sur la partition créée dans la station hôte sont chiffrées par l'entité électronique portable puis transmises et mémorisées dans celle-ci ou dans une mémoire de masse connectée à celle-ci.

La figure 5 illustre un exemple d'algorithme mis en oeuvre dans une station hôte, dans le logiciel de contrôle, pour chiffrer des données dans une entité électronique portable et mémoriser ces données dans celle-ci ou via celle-ci.

Ainsi, par exemple, lorsque l'utilisateur veut déconnecter l'entité électronique portable ou sur requête de la station hôte ou de l'entité électronique portable, notamment pour effectuer une sauvegarde des données, les données présentes sur la partition créée, représentant ici le fichier appelé Fclair, sont transmises au microcontrôleur sécurisé de l'entité électronique (étape 500) pour y être chiffrées à l'aide de la clé Kd déterminée lors de l'accès aux données. S'il s'agit de nouvelles données, une clé Kd est, par exemple, déterminée aléatoirement.

Les données chiffrées reçues en réponse à cette requête de chiffrement (étape 505) sont ensuite transférées vers le contrôleur mémoire de l'entité électronique portable (étape 510) pour y être mémorisées.

De façon avantageuse, les données chiffrées reçues de l'entité électronique portable sont mémorisées dans la station hôte sous forme d'un fichier chiffré (Fchiffré) avant d'être retransmises vers l'entité électronique portable pour y être mémorisées.

La figure 6 illustre un exemple d'algorithme pouvant être exécuté par une entité électronique portable selon l'invention pour permettre à une station hôte de transférer des données dans ou via cette entité électronique portable, ces données étant mémorisées sous forme chiffrées.

Après avoir reçu des données non chiffrées à chiffrer (étape 600), le microcontrôleur sécurisé de l'entité électronique portable chiffre les données avec la clé Kd correspondant à l'utilisateur identifié et/ou aux données à chiffrer (étape 605) avant de les retransmettre vers la station hôte (étape 610).

Une partie de la clé Kd, appelée clé maître est mémorisée dans le microcontrôleur sécurisé, de préférence dans une mémoire de type EEPROM, tandis qu'une autre partie est associée aux données chiffrées, de préférence sous forme d'en-tête.

Dans cette phase, notée ④, les messages sont échangés entre la station hôte et le microcontrôleur sécurisé. Il n'est fait pas appel, ici, au contrôleur mémoire.

Lorsque l'entité électronique portable reçoit des données chiffrées à mémoriser (étape 615), celles-ci sont mémorisées dans la mémoire de masse de l'entité électronique portable ou dans une mémoire de masse connecté à celle-ci (étape 620).

Dans cette phase, notée ⑤, les messages sont échangés entre la station hôte et le contrôleur mémoire. Il n'est pas fait appel, ici, au microcontrôleur sécurisé.

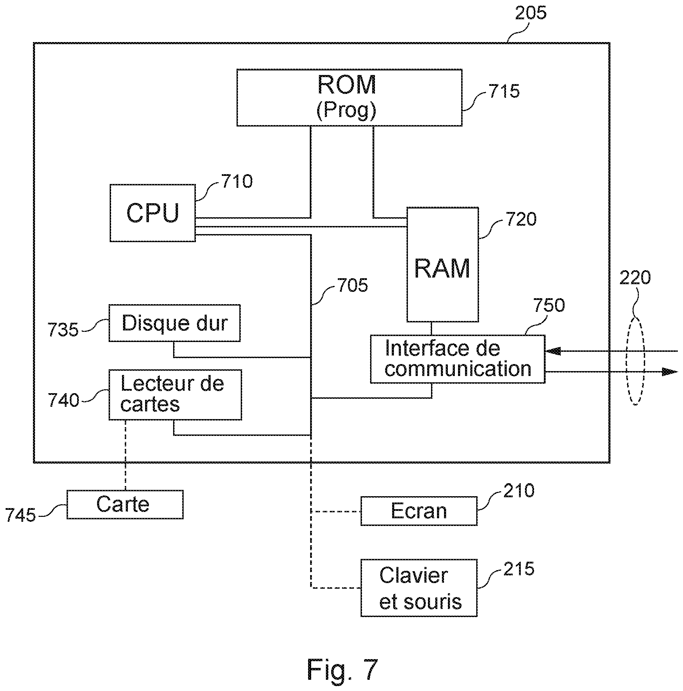

Une unité centrale 205 adaptée à mettre en oeuvre l'invention est illustrée sur la figure 7. Comme indiqué précédemment, l'unité centrale 205 est comprise, par exemple, dans un micro-ordinateur, un téléphone mobile ou un assistant personnel.

L'unité centrale 205 comporte ici un bus de communication 705 auquel sont reliés :
- une unité de traitement ou microprocesseur 710 (CPU) ;
- une mémoire morte 715 (ROM) pouvant comporter le programme "Prog" de contrôle d'accès ainsi que les modules logiciels nécessaires à la transmission de données entre l'unité centrale 205 et un périphérique connecté à elle ;
- une mémoire vive ou mémoire cache 720 (RAM) comportant des registres adaptés à enregistrer des variables et paramètres créés et modifiés au cours de l'exécution des programmes précités ; et,
- une interface de communication 750 adaptée à transmettre et à recevoir des données, en particulier à transmettre et à recevoir des données à un périphérique connecté à l'interface 220.

L'unité centrale 205 peut également disposer :
- d'un écran 210 permettant de visualiser des données et/ou de servir d'interface graphique avec l'utilisateur qui pourra interagir avec les programmes selon l'invention, à l'aide d'un clavier et d'une souris 215 ou d'un autre dispositif de saisie et de pointage ;
- d'un disque dur 735 pouvant comporter le programme "prog" et les modules logiciels de transmission de données précités et des données traitées ou à traiter ; et,
- d'un lecteur de cartes 740 adapté à recevoir une carte 745, par exemple une carte à microcircuit comprenant des données cryptographiques d'authentification.

Le bus de communication permet la communication et l'interopérabilité entre les différents éléments inclus dans l'unité centrale 205 ou reliés à elle. La représentation du bus n'est pas limitative et, notamment, l'unité centrale est susceptible de communiquer des instructions à tout élément de l'unité centrale 205 directement ou par l'intermédiaire d'un autre élément de celle-ci.

Le code exécutable des programmes permettant à l'unité centrale 205 de mettre en oeuvre les processus selon l'invention, peut être stocké, par exemple, dans le disque dur 735 ou en mémoire morte 715.

Selon une variante, le code exécutable des programmes, en particulier du programme de contrôle d'accès, peut être reçu, au moins partiellement, par l'intermédiaire de l'interface 750, pour être stocké de façon identique à celle décrite précédemment.

L'unité centrale de traitement 710 commande et dirige l'exécution des instructions ou portions de code logiciel du ou des programmes.

Il convient de noter que les éléments de l'unité centrale 205 nécessaires à la mise en oeuvre de l'invention peuvent également être arrangés sous la forme d'un appareil programmé. Cet appareil contient alors le code du ou des programmes informatiques par exemple figé dans un circuit intégré à application spécifique (ASIC).

Naturellement, pour satisfaire des besoins spécifiques, une personne compétente dans le domaine de l'invention pourra appliquer des modifications dans la description précédente.

## Revendications

1. Procédé pour accéder à au moins une donnée chiffrée préalablement mémorisée dans une mémoire de masse d'une entité électronique portable (100) ou dans une mémoire de masse accessible via ladite entité électronique portable, ladite entité électronique portable, adaptée à être connectée à une station hôte (200), ladite entité électronique portable (100) comprenant des moyens d'accès (110) à ladite mémoire de masse comprenant ladite au moins une donnée chiffrée et des moyens de sécurisation (125) adaptés à déchiffrer ladite au moins une donnée chiffrée, lesdits moyens d'accès et lesdits moyens de sécurisation étant distincts et indépendants et n'échangeant pas de données entre eux, ce procédé comprenant les étapes suivantes,
- réception de ladite au moins une donnée chiffrée desdits moyens d'accès ;
- transmission de ladite au moins une donnée chiffrée reçue auxdits moyens de sécurisation pour y être déchiffrée ; et,
- réception de ladite au moins une donnée déchiffrée,
lesdites étapes étant mises en oeuvre dans ladite station hôte.

2. Procédé selon la revendication précédente comprenant en outre une étape de création d'une partition, ladite partition comprenant au moins ladite au moins une donnée déchiffrée reçue.

3. Procédé selon la revendication 1 ou la revendication 2 comprenant en outre les étapes suivantes,
- transmission d'au moins une information d'authentification auxdits moyens de sécurisation ; et,
- réception d'une indication d'authentification,
lesdites étapes étant mises en oeuvre dans ladite station hôte.

4. Procédé selon la revendication précédente selon lequel ladite au moins une donnée déchiffrée n'est reçue qu'après authentification.

5. Procédé selon la revendication 3, dépendante de la revendication 2, selon lequel ladite étape de création de partition n'est réalisée qu'après authentification.

6. Procédé pour mémoriser au moins une donnée de façon chiffrée dans une mémoire de masse d'une entité électronique portable (100) ou dans une mémoire de masse accessible via ladite entité électronique portable, ladite entité électronique portable étant adaptée à être connectée à une station hôte (200), et ladite entité électronique portable (100) comprenant des moyens d'accès (110) à ladite mémoire de masse et des moyens de sécurisation (125) adaptés à chiffrer ladite au moins une donnée, lesdits moyens d'accès et lesdits moyens de sécurisation étant distincts et indépendants et n'échangeant pas de données entre eux, ce procédé comprenant les étapes suivantes,
- transmission de ladite au moins une donnée auxdits moyens de sécurisation pour y être chiffrée ;
- réception de ladite au moins une donnée chiffrée desdits moyens de sécurisation ; et,
- transmission de ladite au moins une donnée chiffrée auxdits moyens d'accès pour mémoriser ladite au moins une donnée chiffrée dans ladite mémoire de masse,
lesdites étapes étant mises en oeuvre dans ladite station hôte.

7. Procédé selon l'une quelconque des revendications 2 à 5, les revendications 3 à 5 étant dépendantes de la revendication 2, comprenant en outre une étape de mémorisation de toutes les données de ladite partition créée selon le procédé de la revendication 6.

8. Procédé selon la revendication précédente selon lequel ladite étape de mémorisation de toutes les données est effectuée automatiquement au cours d'une procédure de déconnexion de ladite entité électronique portable.

9. Procédé selon la revendication 7 selon lequel ladite étape de mémorisation de toutes les données est effectuée sur requête de l'utilisateur de ladite entité électronique portable ou de ladite station hôte.

10. Procédé pour accéder au moins une donnée chiffrée préalablement mémorisée dans une mémoire de masse d'une entité électronique portable (100) ou dans une mémoire de masse accessible via ladite entité électronique portable, ladite entité électronique portable étant adaptée à être connectée à une station hôte (200), et ladite entité électronique portable (100) comprenant des moyens d'accès (110) à ladite mémoire de masse comprenant ladite au moins une donnée chiffrée et des moyens de sécurisation (125) adaptés à déchiffrer ladite au moins une donnée, lesdits moyens d'accès et lesdits moyens de sécurisation étant distincts et indépendants et n'échangeant pas de données entre eux, ce procédé comprenant les étapes suivantes,
- réception d'une requête d'accès à ladite au moins une donnée chiffrée par lesdits moyens d'accès ;
- transmission de ladite au moins une donnée chiffrée à ladite station hôte ;
- réception de ladite au moins une donnée chiffrée par lesdits moyens de sécurisation ;
- déchiffrement de ladite au moins une donnée chiffrée ; et,
- transmission de ladite au moins une donnée déchiffrée à ladite station hôte.

11. Procédé pour mémoriser au moins une donnée de façon chiffrée dans une mémoire de masse d'une entité électronique portable (100) ou dans une mémoire de masse accessible via ladite entité électronique portable, ladite entité électronique portable étant adaptée à être connectée à une station hôte (200), et ladite entité électronique portable (100) comprenant des moyens d'accès (110) à ladite mémoire de masse et des moyens de sécurisation (125) adaptés à chiffrer ladite au moins une donnée, lesdits moyens d'accès et lesdits moyens de sécurisation étant distincts et indépendants et n'échangeant pas de données entre eux, ce procédé comprenant les étapes suivantes,
- réception de ladite au moins une donnée par lesdits moyens de sécurisation ;
- chiffrement de ladite au moins une donnée dans lesdits moyens de sécurisation ;
- transmission de ladite au moins une donnée chiffrée à ladite station hôte ;
- réception de ladite au moins une donnée chiffrée de ladite station hôte par lesdits moyens d'accès ; et,
- transmission de ladite au moins une donnée chiffrée à ladite mémoire de masse pour y être mémorisée.

12. Procédé selon la revendication 10 ou la revendication 11 comprenant en outre une étape de réception d'au moins une information d'authentification et une étape d'authentification de l'utilisateur de ladite entité électronique portable.

13. Procédé selon la revendication précédente selon lequel ladite étape d'authentification est mise en oeuvre dans lesdits moyens de sécurisation.

14. Procédé selon la revendication 12 ou la revendication 13 selon lequel ladite au moins une information d'authentification est reçue de moyens de saisie de ladite entité électronique portable.

15. Procédé selon l'une quelconque des revendications 12 à 14, dépendantes de la revendication 10, selon lequel lesdites étapes de déchiffrement et de transmission de ladite au moins une donnée déchiffrée ne sont exécutées qu'après authentification dudit utilisateur de ladite entité électronique portable.

16. Procédé selon l'une quelconque des revendications 12 à 14, dépendantes de la revendication 11, selon lequel lesdites étapes de chiffrement et de transmission de ladite au moins une donnée chiffrée ne sont exécutées qu'après authentification dudit utilisateur de ladite entité électronique portable.

17. Dispositif pour entité électronique portable (100) comprenant des moyens d'accès (110) à une zone mémoire et des moyens de sécurisation (125), lesdits moyens de sécurisation comprenant des moyens de chiffrement et de déchiffrement adaptés à chiffrer au moins une donnée à mémoriser dans ladite zone de mémoire et à déchiffrer ladite au moins une donnée mémorisée dans ladite zone de mémoire, ladite entité électronique portable étant adaptée à être connectée à une station hôte (200) et adaptée pour réaliser les étapes du procédé selon l'une quelconque des revendications 10 à 16, lesdits moyens d'accès et lesdits moyens de sécurisation sont distincts et indépendants et n'échangent pas de données entre eux.

## Patentansprüche

1. Verfahren, um auf mindestens ein verschlüsseltes Datum zuzugreifen, das vorher in einem Massenspeicher einer tragbaren elektronischen Einheit (100) oder in einem Massenspeicher, der über die tragbare elektronische Einheit zugänglich ist, gespeichert wurde, wobei die tragbare elektronische Einheit dazu ausgelegt ist, an eine Host-Station (200) angeschlossen zu werden, wobei die tragbare elektronische Einheit (100) Zugriffsmittel (110) auf den Massenspeicher umfasst, umfassend das mindestens eine verschlüsselte Datum und Sicherungsmittel (125), die dazu ausgelegt sind, das mindestens eine verschlüsselte Datum zu entschlüsseln, wobei die Zugriffsmittel und die Sicherungsmittel getrennt und unabhängig sind und keine Daten untereinander austauschen, wobei dieses Verfahren die folgenden Schritte umfasst:
- Empfang des mindestens einen verschlüsselten Datums von den Zugriffsmitteln;
- Übertragung des mindestens einen empfangenen verschlüsselten Datums an die Sicherungsmittel, um dort entschlüsselt zu werden; und
- Empfang des mindestens einen entschlüsselten Datums, wobei die Schritte in der Host-Station eingesetzt werden.

2. Verfahren nach dem vorhergehenden Anspruch, ferner umfassend einen Schritt der Erzeugung einer Teilung, wobei die Teilung mindestens das mindestens eine empfangene entschlüsselte Datum umfasst.

3. Verfahren nach Anspruch 1 oder Anspruch 2, ferner umfassend die folgenden Schritte:
- Übertragung mindestens einer Authentifizierungsinformation an die Sicherungsmittel; und
- Empfang einer Authentifizierungsanzeige,
wobei die Schritte in der Host-Station eingesetzt werden.

4. Verfahren nach dem vorhergehenden Anspruch, bei dem das mindestens eine entschlüsselte Datum erst nach der Authentifizierung empfangen wird.

5. Verfahren nach Anspruch 3 in Abhängigkeit von Anspruch 2, bei dem der Schritt der Erzeugung einer Teilung erst nach der Authentifizierung durchgeführt wird.

6. Verfahren zum Speichern mindestens eines Datums in verschlüsselter Form in einem Massenspeicher einer tragbaren elektronischen Einheit (100) oder in einem Massenspeicher, der über die tragbare elektronische Einheit zugänglich ist, wobei die tragbare elektronische Einheit dazu ausgelegt ist, an eine Host-Station (200) angeschlossen zu werden, wobei die tragbare elektronische Einheit (100) Zugriffsmittel (110) auf den Massenspeicher und Sicherungsmittel (125) umfasst, die dazu ausgelegt sind, das mindestens eine Datum zu verschlüsseln, wobei die Zugriffsmittel und die Sicherungsmittel getrennt und unabhängig sind und keine Daten untereinander austauschen, wobei dieses Verfahren die folgenden Schritte umfasst:
- Übertragung des mindestens einen Datums an die Sicherungsmittel, um dort verschlüsselt zu werden;
- Empfang des mindestens einen verschlüsselten Datums von den Sicherungsmitteln; und
- Übertragung des mindestens einen verschlüsselten Datums an die Zugriffsmittel, um das mindestens eine verschlüsselte Datum in dem Massenspeicher zu speichern,
wobei die Schritte in der Host-Station eingesetzt werden.

7. Verfahren nach einem der Ansprüche 2 bis 5, wobei die Ansprüche 3 bis 5 von Anspruch 2 abhängig sind, ferner umfassend einen Schritt der Speicherung aller Daten der erzeugten Teilung nach dem Verfahren aus Anspruch 6.

8. Verfahren nach dem vorhergehenden Anspruch, bei dem der Schritt der Speicherung aller Daten automatisch während eines Verfahrens der Trennung der tragbaren elektronischen Einheit erfolgt.

9. Verfahren nach Anspruch 7, bei dem der Schritt der Speicherung aller Daten auf Antrag des Benutzers der tragbaren elektronischen Einheit oder der Host-Station erfolgt.

10. Verfahren, um auf mindestens ein verschlüsseltes Datum zuzugreifen, das vorher in einem Massenspeicher einer tragbaren elektronischen Einheit (100) oder in einem Massenspeicher, der über die tragbare elektronische Einheit zugänglich ist, gespeichert wurde, wobei die tragbare elektronische Einheit dazu ausgelegt ist, an eine Host-Station (200) angeschlossen zu werden, wobei die tragbare elektronische Einheit (100) Zugriffsmittel (110) auf den Massenspeicher umfasst, umfassend das mindestens eine verschlüsselte Datum und Sicherungsmittel (125), die dazu ausgelegt sind, das mindestens eine Datum zu entschlüsseln, wobei die Zugriffsmittel und die Sicherungsmittel getrennt und unabhängig sind und keine Daten untereinander austauschen, wobei dieses Verfahren die folgenden Schritte umfasst:
- Empfang eines Antrags auf Zugriff auf das mindestens eine verschlüsselte Datum durch die Zugriffsmittel;
- Übertragung des mindestens einen verschlüsselten Datums an die Host-Station;
- Empfang des mindestens einen verschlüsselten Datums durch die Sicherungsmittel;
- Entschlüsselung des mindestens einen verschlüsselten Datums; und
- Übertragung des mindestens einen entschlüsselten Datums an die Host-Station.

11. Verfahren, um mindestens ein Datum in verschlüsselter Form in einem Massenspeicher einer tragbaren elektronischen Einheit (100) oder in einem Massenspeicher, der über die tragbare elektronische Einheit zugänglich ist, zu speichern, wobei die tragbare elektronische Einheit dazu ausgelegt ist, an eine Host-Station (200) angeschlossen zu werden, wobei die tragbare elektronische Einheit (100) Zugriffsmittel (110) auf den Massenspeicher und Sicherungsmittel (125) umfasst, die dazu ausgelegt sind, das mindestens eine Datum zu verschlüsseln, wobei die Zugriffsmittel und die Sicherungsmittel getrennt und unabhängig sind und keine Daten untereinander austauschen, wobei dieses Verfahren die folgenden Schritte umfasst:
- Empfang des mindestens einen Datums von den Sicherungsmitteln;
- Verschlüsselung des mindestens einen Datums in den Sicherungsmitteln;
- Übertragung des mindestens einen verschlüsselten Datums an die Host-Station;
- Empfang des mindestens einen verschlüsselten Datums von der Host-Station durch die Zugriffsmittel; und
- Übertragung des mindestens einen verschlüsselten Datums an den Massenspeicher, um dort gespeichert zu werden.

12. Verfahren nach Anspruch 10 oder Anspruch 11, ferner umfassend einen Schritt des Empfangs mindestens einer Authentifizierungsinformation und einen Schritt der Authentifizierung des Benutzers der tragbaren elektronischen Einheit.

13. Verfahren nach dem vorhergehenden Anspruch, bei dem der Authentifizierungsschritt in den Sicherungsmitteln eingesetzt wird.

14. Verfahren nach Anspruch 12 oder Anspruch 13, bei dem die mindestens eine Authentifizierungsinformation von Erfassungsmitteln der tragbaren elektronischen Einheit empfangen wird.

15. Verfahren nach einem der Ansprüche 12 bis 14 in Abhängigkeit von Anspruch 10, bei dem die Schritte der Entschlüsselung und Übertragung des mindestens einen entschlüsselten Datums erst nach Authentifizierung des Benutzers der tragbaren elektronischen Einheit ausgeführt werden.

16. Verfahren nach einem der Ansprüche 12 bis 14 in Abhängigkeit von Anspruch 11, bei dem die Schritte der Verschlüsselung und Übertragung des mindestens einen verschlüsselten Datums erst nach Authentifizierung des Benutzers der tragbaren elektronischen Einheit ausgeführt werden.

17. Vorrichtung für eine tragbare elektronische Einheit (100), umfassend Zugriffsmittel (110) auf mindestens eine Speicherzone und Sicherungsmittel (125), wobei die Sicherungsmittel Mittel zum Verschlüsseln und Entschlüsseln umfassen, die dazu ausgelegt sind, mindestens ein in der Speicherzone zu speicherndes Datum zu verschlüsseln, und das mindestens eine in der Speicherzone gespeicherte Datum zu entschlüsseln, wobei die tragbare elektronische Einheit dazu ausgelegt ist, an eine Host-Station (200) angeschlossen zu werden und dazu ausgelegt ist, die Schritte des Verfahrens nach einem der Ansprüche 10 bis 16 auszuführen, wobei die Zugriffsmittel und die Sicherungsmittel getrennt und unabhängig sind und keine Daten untereinander austauschen.

## Claims

1. Method for accessing at least one enciphered datum previously stored in a mass memory of a portable electronic entity (100) or in a mass memory accessible via said portable electronic entity, said portable electronic entity, adapted to be connected to a host station (200), said portable electronic entity (100) comprising means of access (110) to said mass memory comprising said at least one enciphered datum and securing means (125) adapted to decipher said at least one enciphered datum, said access means and said securing means being distinct and independent and not exchanging data with one another, this method comprising the following steps,
- reception of said at least one enciphered datum from said access means;
- transmission of said at least one received enciphered datum to said securing means so as to be deciphered therein; and,
- reception of said at least one deciphered datum, said steps being implemented in said host station.

2. Method according to the preceding claim furthermore comprising a step of creating a partition, said partition comprising at least said at least one received deciphered datum.

3. Method according to Claim 1 or Claim 2 furthermore comprising the following steps,
- transmission of at least one authentication information item to said securing means; and,
- reception of an authentication indication,
said steps being implemented in said host station.

4. Method according to the preceding claim, according to which said at least one deciphered datum is received only after authentication.

5. Method according to Claim 3, dependent on Claim 2, according to which said partition creating step is carried out only after authentication.

6. Method for storing at least one datum in an enciphered manner in a mass memory of a portable electronic entity (100) or in a mass memory accessible via said portable electronic entity, said portable electronic entity being adapted to be connected to a host station (200), and said portable electronic entity (100) comprising means of access (110) to said mass memory and securing means (125) adapted to encipher said at least one datum, said access means and said securing means being distinct and independent and not exchanging data with one another, this method comprising the following steps,
- transmission of said at least one datum to said securing means so as to be enciphered therein;
- reception of said at least one enciphered datum from said securing means; and,
- transmission of said at least one enciphered datum to said access means so as to store said at least one enciphered datum in said mass memory,
said steps being implemented in said host station.

7. Method according to any one of Claims 2 to 5, Claims 3 to 5 being dependent on Claim 2, furthermore comprising a step of storing all the data of said partition created according to the method of Claim 6.

8. Method according to the preceding claim, according to which said step of storing all the data is performed automatically in the course of a procedure for disconnecting said portable electronic entity.

9. Method according to Claim 7, according to which said step of storing all the data is performed on request of the user of said portable electronic entity or of said host station.

10. Method for accessing at least one enciphered datum previously stored in a mass memory of a portable electronic entity (100) or in a mass memory accessible via said portable electronic entity, said portable electronic entity being adapted to be connected to a host station (200), and said portable electronic entity (100) comprising means of access (110) to said mass memory comprising said at least one enciphered datum and securing means (125) adapted to decipher said at least one datum, said access means and said securing means being distinct and independent and not exchanging data with one another, this method comprising the following steps,
- reception of a request for access to said at least one enciphered datum by said access means;
- transmission of said at least one enciphered datum to said host station;
- reception of said at least one enciphered datum by said securing means;
- deciphering of said at least one enciphered datum; and,
- transmission of said at least one deciphered datum to said host station.

11. Method for storing at least one datum in an enciphered manner in a mass memory of a portable electronic entity (100) or in a mass memory accessible via said portable electronic entity, said portable electronic entity being adapted to be connected to a host station (200), and said portable electronic entity (100) comprising means of access (110) to said mass memory and securing means (125) adapted to encipher said at least one datum, said access means and said securing means being distinct and independent and not exchanging data with one another, this method comprising the following steps,
- reception of said at least one datum by said securing means;
- enciphering of said at least one datum in said securing means;
- transmission of said at least one enciphered datum to said host station;
- reception of said at least one enciphered datum from said host station by said access means; and,
- transmission of said at least one enciphered datum to said mass memory so as to be stored therein.

12. Method according to Claim 10 or Claim 11 furthermore comprising a step of receiving at least one authentication information item and a step of authenticating the user of said portable electronic entity.

13. Method according to the preceding claim, according to which said authentication step is implemented in said securing means.

14. Method according to Claim 12 or Claim 13, according to which said at least one authentication information item is received from means of input of said portable electronic entity.

15. Method according to any one of Claims 12 to 14, dependent on Claim 10, according to which said steps of deciphering and of transmitting said at least one deciphered datum are executed only after authentication of said user of said portable electronic entity.

16. Method according to any one of Claims 12 to 14, dependent on Claim 11, according to which said steps of enciphering and of transmitting said at least one enciphered datum are executed only after authentication of said user of said portable electronic entity.

17. Device for portable electronic entity (100) comprising means of access (110) to a memory area and securing means (125), said securing means comprising enciphering and deciphering means adapted to encipher at least one datum to be stored in said memory area and to decipher said at least one datum stored in said memory area,
said portable electronic entity being adapted to be connected to a host station (200) and adapted to carry out the steps of the method according to any one of Claims 10 to 16, said access means and said securing means are distinct and independent and do not exchange data with one another.
